# EUROPEAN PATENT APPLICATION

(11) **EP 4 693 825 A1**
(43) Date of publication of application: **11.02.2026**
(21) Application number: 24784863.3
(22) Date of filing: 01.04.2024
(51) Int. Cl.: H02J 50/40, B60L 5/00, B60L 50/60, B60L 53/12, B60L 53/60, B60L 58/12, B60M 7/00, H02J 3/14, H02J 7/00, H02J 13/00, H02J 50/12, H02J 50/80

(54) **NON-CONTACT POWER SUPPLY SYSTEM, COMPUTER PROGRAM, POWER RECEPTION DEVICE, AND POWER TRANSMISSION DEVICE**

(30) Priority: 05.04.2023 JP 2023061079
(71) Applicant: DENSO CORPORATION, Kariya-city, Aichi 448-8661 (JP)
(72) Inventor: NAKAYASHIKI, Yusei, Kariya- city, Aichi 4488661 (JP); TANI, Keisuke, Kariya- city, Aichi 4488661 (JP); YAMAGUCHI, Nobuhisa, Kariya- city, Aichi 4488661 (JP); OBAYASHI, Kazuyoshi, Kariya- city, Aichi 4488661 (JP); TAKAHASHI, Masaya, Kariya- city, Aichi 4488661 (JP); YAMADA, Hidetoshi, Kariya- city, Aichi 4488661 (JP); KANESAKI, Masaki, Kariya- city, Aichi 4488661 (JP)
(74) Representative: TBK
(86) International application number: PCT/JP2024/013408
(87) International publication number: WO 2024/210078

(57) **Abstract**

A wireless power transfer system (1000, 1000A,1000B) is provided with a transmission circuit (110, 110A) supplied with power from a system power source (PS), supplying a high frequency AC power having a predetermined operating frequency; a plurality of transmission apparatuses (120, 120A, 120B) mutually connected in parallel to the transmission circuit, capable of supplying power in a wireless manner; a plurality of reception apparatuses (200), when being located in any one of transmission areas where the transmission apparatuses are capable of transmitting power, receiving power from the transmission apparatus in a wireless manner; and a power supply suppression unit (400) that controls respective reception apparatuses such that a total amount of power supply required by the plurality of reception apparatuses does not exceed an output power limit. The respective reception apparatuses transmit reception apparatus side information to a power supply suppression unit, and the power supply suppression unit utilizes the reception apparatus side information to control the respective reception apparatuses.

## Description

### [Cross-Reference of Related Applications]

The present application is based on Japanese Application No. 2023-61079 filed on April 5, 2023, and claims the benefit of its priority, with the entire contents of the patent application incorporated herein by reference.

### BACKGROUND

### [Technical Field]

The present disclosure relates to a wireless power transfer system, a computer program, a reception apparatus and a transmission apparatus.

### [Description of the Related Art]

A power transfer system that supplies power to an electric vehicle is known. According to such a power transfer system, when supplying power to a plurality of electric vehicles, an amount of power supply is required not to exceed a maximum power capable of being outputted by a power source apparatus. A power charging system disclosed by PTL1 is configured to acquire a remaining capacity of a storage battery and a destination of each electric vehicle, and determines a charging schedule for a charging apparatus provided at each home, thereby preventing a plurality of charging apparatuses from being simultaneously used and an amount of power supply from becoming excessive.

### [Citation List]

### [Patent Literature]

[PTL1] JP-A-2013-65265

### [Summary of the Invention]

However, according to a power supply system for an electric vehicle such as an automatic guided vehicle (i.e. AGV) that performs a power supply operation during travelling in an area capable of supplying power, or a fixed facility to which power is supplied during the operation, a power supply timing or an amount of power supply significantly varies, depending on an operation state of the electric vehicle provided with a reception apparatus, or depending on the fixed facility. Hence, according to a charging system disclosed by PTL1 in which a charging schedule of the charging apparatus is controlled, an amount of power supply is not sufficiently suppressed depending on the operation state of the electric vehicle or of the fixed facility

The present disclosure can be embodied as a following manner.

According to one aspect of the present disclosure, a wireless power transfer system is provided. The wireless power transfer system is provided with a transmission circuit supplied with power from a system power source (PS), supplying a high frequency AC power having a predetermined operating frequency; a plurality of transmission apparatuses mutually connected in parallel to the transmission circuit, capable of supplying power in a wireless manner; a plurality of reception apparatuses, when being located in any one of transmission areas where the transmission apparatuses are capable of transmitting power, receiving power from the transmission apparatus in a wireless manner; and a power supply suppression unit that controls respective reception apparatuses such that a total amount of power supply required by the plurality of reception apparatuses does not exceed an output power limit as a continuous power in which the system power source and the transmission circuit are capable of continuing a power supply operation, wherein respective reception apparatuses transmit reception apparatus side information as information indicating operation states of the reception apparatuses to the power supply suppression unit; and the power supply suppression unit utilizes the reception apparatus side information to control the respective reception apparatuses.

According to the control apparatus of the above-described aspect, a reception apparatus side information is utilized to control the respective reception apparatuses such that a total amount of power supply required by a plurality of reception apparatuses does not exceed an output power limit. Therefore, an amount of power supply can be adjusted depending on the operation states of the respective reception apparatuses.

### [Brief Description of the Drawings]

The above-described objects and other objects, features and advantages of the present disclosure will be clarified further by the following detailed description with reference to the accompanying drawings. The drawings are:
Fig.1 is an explanatory diagram showing an overall configuration of a wireless power transfer system according to a first embodiment;

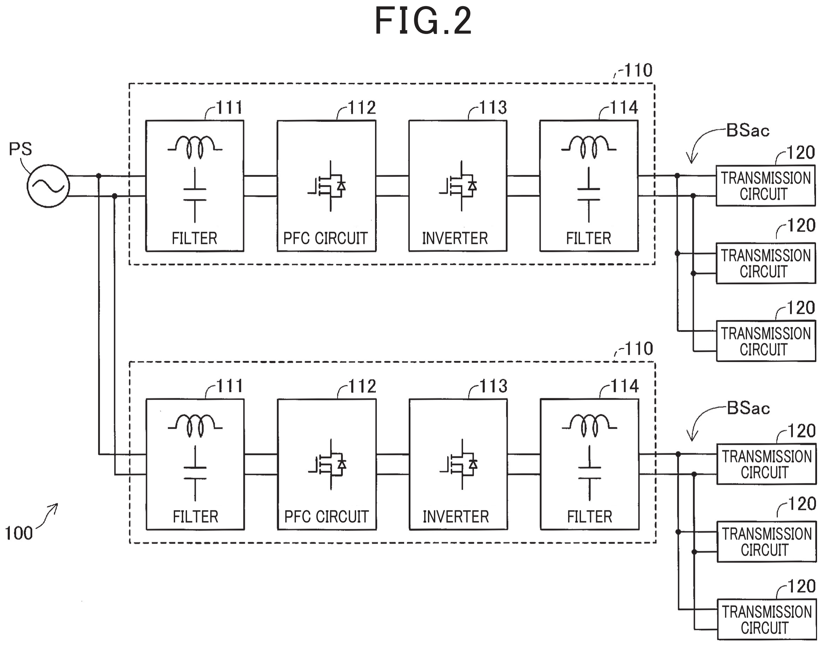

Fig.2 is an explanatory diagram showing a circuit configuration of a transmission circuit according to the first embodiment;
Fig.3 is an explanatory diagram showing a circuit configuration of the wireless power transfer system according to the first embodiment;
Fig.4 is a flow chart showing a procedure of a control executed by a power supply suppression unit in a power supply suppression control according to the first embodiment;
Fig.5 is a flow chart showing a procedure of a control executed by a reception apparatus in a power supply suppression control according to the first embodiment;
Fig.6 is a flow chart showing a procedure of a control executed by a power supply suppression unit in a power supply suppression control according to a second embodiment;
Fig.7 is a flow chart showing a procedure of a control executed by a power supply suppression unit in a power supply suppression control according to a fourth embodiment;
Fig.8 is a flow chart showing a procedure of a control executed by a reception apparatus in a power supply suppression control according to a fifth embodiment;
Fig.9 is a flow chart showing a procedure of a control executed by a reception apparatus in a power supply suppression control according to a sixth embodiment;
Fig.10 is an explanatory diagram showing a circuit configuration of a transmission circuit according to other embodiment;
Fig.11 is an explanatory diagram showing a circuit configuration of a wireless power transfer system according to other embodiment; and
Fig.12 is an explanatory diagram showing a circuit configuration of a wireless power transfer system according to other embodiment.

### [Description of Embodiments]

### A. First Embodiment:

### A-1. Apparatus configuration

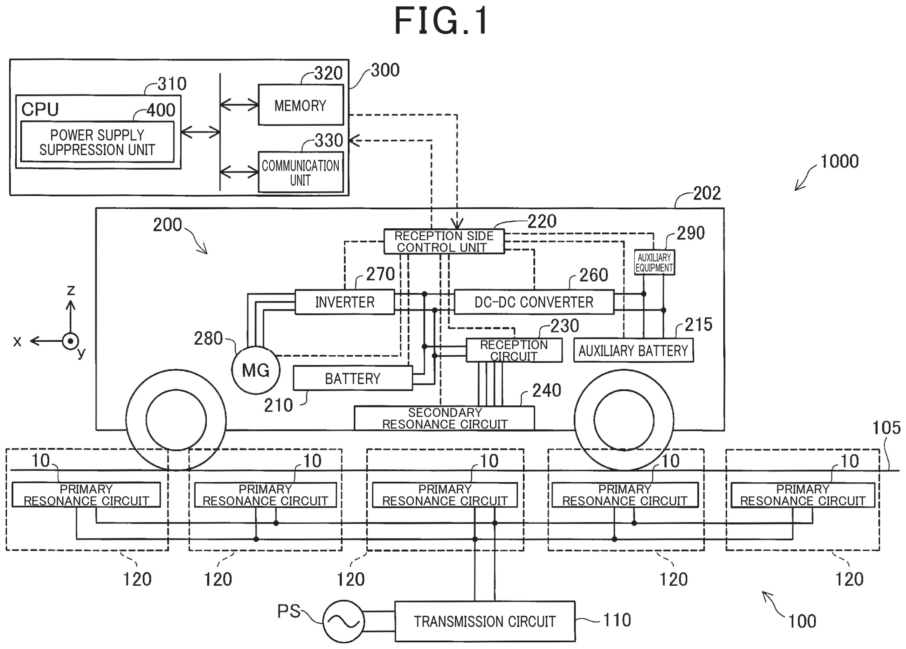

A wireless power transfer system 1000 according to the present embodiment is utilized in a factory or a warehouse to supply power in a wireless manner from a power transmission system 100 to a reception apparatus 200 mounted on a mobile body such as an automatic guide vehicle (i.e. AGV) or in a fixed facility such as a multi-joint robot for conveying or a conveyor. In the following description, the reception apparatus 200 mounted on the mobile body and the reception apparatus 200 mounted on the fixed facility are respectively referred to as mobile reception apparatus and fixed reception apparatus as needed to be distinguished with each other. As shown in Fig.1, the wireless power transfer system 1000 is provided with a power transmission system 100, a reception apparatus 200 and a control apparatus 300. According to the present embodiment, the power transmission system 100 is embedded under a floor 105. In Fig.1, as a mobile reception apparatus, the reception apparatus 200 mounted on an electric vehicle 202 as a mobile body traveling on the floor 104 is illustrated. In Fig.1, the x axis direction indicates a traveling direction of the electric vehicle 202, the y axis direction indicates a width direction of the electric vehicle 202 and the z axis direction indicates a vertically upper direction. Note that, since a configuration of the reception apparatus 200 as a fixed reception apparatus is the same as that of the reception apparatus 200 as the mobile reception apparatus, illustration is omitted in Fig.1. Further, although the wireless power transfer system 1000 is provided with a plurality of reception apparatuses 200, since the respective reception apparatuses 200 have the same configuration, illustration is omitted in Fig.1.

The power transmission system 100 is provided with a transmission circuit 110 and a plurality of transmission apparatuses 120. The transmission circuit 110 is supplied with an AC power from a system power source PS, and converts the AC power to have a predetermined operating frequency. As shown in Fig.110, the transmission circuit 110 is provided with a noise filter 111, a PFC (power factor correction) circuit 112, an inverter 113 and a high frequency filter 114 in this order from a side where the system power source PS is connected. According to the present embodiment, two transmission circuits 110 are mutually connected in parallel to the system power source PS. Note that, only one transmission circuit 110 may be connected to the system power source PS or three or more transmission circuits 110 may be mutually connected in parallel to the system power source PS.

The noise filter 111 eliminates noise in the AC power supplied from the system power source PS. The PFC circuit 112 is a known circuit which removes phase difference between the input voltage and the output voltage produced due to the noise elimination by the noise filter 11 and causes the power factor to be close to 1 by suppressing high frequency components. With the noise filter 111 and the PFC circuit 112, the AC power supplied from the system power source PS is converted to DC power and smoothed. The inverter 113 converts the supplied DC power to be high frequency AC power. The high frequency filter 114 extracts AC power having a predetermined operating frequency from the supplied high frequency AC power and causes the extracted AC power to pass therethrough. The AC power that passes through the high frequency filter 114 is supplied to respective transmission apparatuses 120 via the AC transmission bus BSac.

As shown in Fig.1, a plurality of transmission apparatuses 120 are arranged in the ground under the floor 105 along the x axis direction. The transmission apparatus 120 may be disposed at a portion other than the ground under the floor 105, for example, a side surface of a fixed facility. Further, respective transmission apparatuses are mutually connected in parallel to the transmission circuit 110 and supplied with AC power from the transmission circuit 110. Each transmission apparatus 120 includes a primary resonance circuit 10. The primary resonance circuit 10 is supplied with AC power from the transmission circuit 110 and transmits the AC power to a secondary resonance circuit 240 (described later) in the wireless manner. Specific configuration of the primary resonance circuit 10 will be described later.

The reception apparatus 200 is supplied with power from the transmission apparatus 120, in the case where the reception apparatus is located in a predetermined area (hereinafter also referred to as transmission area) determined for corresponding transmission apparatus 120 and a predetermined power supply condition is satisfied. According to the present embodiment, for the mobile reception apparatus, the power supply condition is that the electric vehicle 202 is travelling and a power supply permission notification is received (described later). Note that 'electric vehicle 202 is traveling' also includes, other than a case where the electric vehicle 202 is moving, a case where the electric vehicle 202 is stopped in the vicinity of the fixed facility such as a handling robot or a conveyor when reloading items to be carried. Further, in the fixed reception apparatus, the power supply condition is that a conveying operation of reloading items to be carried is underway in the fixed facility, and a power supply permission notification is received (described later). Note that the power supply condition is not limited to the above-described condition, but may be arbitrarily set as a condition in which the power supply operation is executed at an appropriate frequency for respective equipment to which the reception apparatus 200 is mounted, depending on operations executed by respective equipment.

The reception apparatus 200 is provided with a battery 210, an auxiliary battery 215, a reception side control unit 220, a reception circuit 230, a secondary resonance circuit 240, a DC-DC converter 260, an inverter 270, a motor generator 280 and an auxiliary equipment 290. Note that the reception apparatus 200 may not be provided with the auxiliary equipment 290. In this case, the auxiliary battery 215 and the DC/DC converter 260 may not be included in the reception apparatus 200. According to the present embodiment, the secondary resonance circuit 240 is provided at a portion facing the floor 105, for example, a lower surface of the electric vehicle 202. In the case where the transmission apparatus 120 is disposed on the side surface of the fixed facility, the secondary resonance circuit 240 may be disposed on the side surface of the electric vehicle 202. Note that specific configuration of the secondary resonance circuit 240 will be described later.

The secondary resonance circuit 240 is connected to a reception circuit 230, and the AC power received by the secondary resonance circuit 240 is converted to DC power by the reception circuit 230. The battery 210, the high voltage side of the DC-DC converter 260 and the inverter 270 are connected to the output of the reception circuit 230. The auxiliary battery 215 and the auxiliary equipment 290 are connected to the low voltage side of the DC-DC converter 260. The motor generator 280 is connected to the inverter circuit 270. The DC power outputted from the reception circuit 230 may be used for charging the battery 210 and for driving the motor generator 280 via the inverter 270. Further, the DC power outputted from the reception circuit 230 is stepped-down by using the DC-DC converter 260, whereby the DC power can be used for charging the auxiliary battery 215 and for driving the auxiliary equipment 290.

The battery 210 is a secondary battery that outputs relatively large DC voltage for driving the motor generator 280, for example, voltage around several tens of volts to several hundred volts. The motor generator 280 operates as a three-phase AC motor and generates a driving force for the electric vehicle 202 for traveling. The motor generator 280 operates as a generator when the electric vehicle 202 decelerates and regenerates power. The inverter circuit 270 converts power of the battery 210 to three-phase AC power, when the motor generator 280 operates as a motor, and supplies the three-phase AC power to the motor generator 280. The inverter circuit 270 converts the three-phase AC power regenerated by the motor generator 280 to DC power, and supplies the DC power to the battery 210, when the motor generator 280 operates as a generator. Note that the battery 210 corresponds to a 'load apparatus'.

The DC-DC converter circuit 260 convers the output voltage of the battery 210 to a voltage lower than the output voltage of the battery 210, for example, 12 volts and supplies the converted output to the auxiliary battery 215 and the auxiliary equipment 290. The auxiliary battery 215 is a secondary battery for driving the auxiliary equipment 290 and the voltage thereof is relatively low. The auxiliary equipment 290 includes peripheral devices of the electric vehicle 202 and various accessories of the electric vehicle 202.

The reception side control unit 220 controls respective units other than the inverter 270 in the electric vehicle 202. The reception side control unit 220, when receiving power, controls the reception circuit 230 to receive the power.

The reception side control unit 220 is configured to be mutually communicable with the control apparatus 300. The reception side control unit 220 transmits reception apparatus side information indicating a state of the reception apparatus 200 to the control apparatus 300 and receives various notifications (described later) transmitted from the control apparatus 300. According to the present embodiment, 'reception apparatus side information' refers to information including location information of the reception apparatus 200, information of whether the reception apparatus 200 is located within the transmission area and information about at least one of state of charge (SOC) of the battery 210, a remaining capacity of the battery 210, current power supply and current power consumption. The above-described information is detected by various sensors included in the reception apparatus 200, and transmitted to the reception side control unit 220.

The control apparatus 300 is configured as computer including a CPU 310, a memory 320 and a communication unit 330. The CPU 310 executes programs stored in the memory 320 in advance, thereby serving as power supply suppression unit 400.

The power supply suppression unit 400 controls the reception apparatus 200 such that a total amount of power supply required by a plurality of reception apparatuses 200 (hereinafter referred to as required amount of power supply) does not exceed an output power limit. Note that 'output power limit' refers to a continuous power in which the system power source PS and the transmission circuit 110 are capable of continuing a power supply operation. Note that the output power limit may be set as a power lower than or equal to a rated output power of the system power source PS and the transmission circuit 110, or may be higher than the rated output power, for example, a power higher than the rated output power by several kilowatts KW, as long as the output power limit has an amount of power allowing the system power source PS and the transmission circuit 110 not to immediately start to operate. According to the present embodiment, the output power limit of the transmission circuit 110 is set in advance. A specific control performed by the power supply suppression unit 400 will be described later.

### A-2. Circuit Configuration

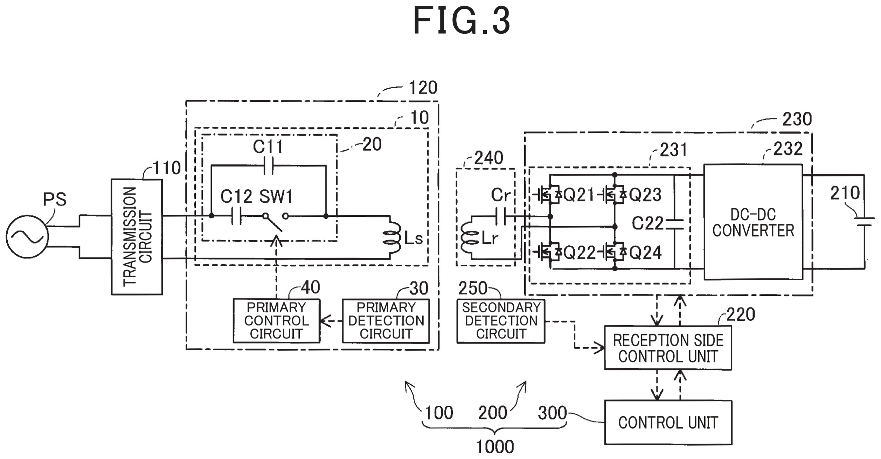

As shown in Fig.3, the transmission apparatus 120 includes a primary coil Ls, a variable impedance element 20, a primary detection circuit 30 and a primary control circuit 40. Note that Fig.3 illustrates only one transmission apparatus 120 among a plurality of transmission apparatuses 120 connected in parallel to the transmission circuit 110 and an illustration of other transmission apparatuses 120 is omitted.

The variable impedance element 20 is connected in series to the primary coil Ls between the transmission circuit 110 and the primary coil Ls. The variable impedance element 20 together with the primary coil Ls constitute the primary resonance circuit 10. The variable impedance element 20 is provided with two capacitors C11 and C12 and a switch SW1. The capacitor C11 and the primary coil Ls are connected in series. The capacitor C12 and the switch SW1 are connected in series and the series-connected capacitor C12 and the switch SW1 is connected in parallel to the capacitor C11. The switch SW1 may be configured as a mechanical switch such as a relay such that contact point thereof is switched in response to an externally-transmitted signal. Also, the switch SW1 may be configured using a semiconductor element such as a MOSFET or an analog switch. The capacitors C11 and C12 correspond to primary capacitor of the present disclosure.

For the variable impedance element 20, when switching the switch SW1 to be ON and OFF, the electrical capacitance varies. When the switch SW1 is ON, the capacitor C12 is connected to the primary coil Ls. At this moment, the electrical capacitance of the variable impedance element 20 equals a total electrical capacitance of the electrical capacitance of the capacitor C11 and the electrical capacitance of the capacitor C12. Further, when the switch SW1 is OFF, the capacitor C12 is separated from the primary coil Ls. At this moment, the electrical capacitance of the variable impedance element 20 equals the electrical capacitance of the capacitor C11. Thus, the electrical capacitance of the variable impedance element 20 varies, whereby the impedance of the primary resonance circuit 10 decreases when the switch SW1 is ON, compared to a case where the switch SW1 is OFF. Due to a change in the impedance of the primary resonance circuit 10, the resonance state of the primary resonance circuit 10 also changes. According to the present embodiment, the primary resonance circuit 10 is in a resonance state at an operating frequency when the switch SW1 is ON, causing a transmission state. Further, the primary resonance circuit 10 is in a non-resonance state at an operating frequency when the switch SW1 is OFF, causing a standby state. In the standby state, the transmission apparatus 120 causes a standby current lower than a current flowing during the transmission state to flow through the primary coil Ls, thereby producing magnetic flux.

The primary detection circuit 30 includes a magnetic flux sensor that detects a magnitude of magnetic flux interlinked with the primary coil Ls and a current sensor that detects a magnitude of the current flowing through the primary coil. According to the present embodiment, the magnetic flux sensor utilizes a change in the voltage of the detection coil magnetically coupled with the primary coil Ls to detect a magnitude of the magnetic flux. Moreover, the current sensor utilizes a change in the voltage of the capacitor C11 to detect a magnitude of the current. The primary detection circuit 30 outputs a signal indicating a magnitude of the detected magnetic flux and a signal indicating a magnitude of the detected current to the primary control circuit 40.

The primary control circuit 40 utilizes a signal outputted from the primary detection circuit 40 to drive the switch SW1 so as to change the state of the switch SW1 to be ON and OFF. More specifically, the primary control circuit 40 changes the state of the switch SW1 to be ON when the magnitude of the magnetic flux indicated by the signal outputted from the primary detection circuit 30 is higher than or equal to a threshold set in advance. Also, the primary control circuit 40 changes the state of the switch SW1 to be OFF when the magnitude of the current indicated by the signal outputted from the primary detection circuit 30 is higher than or equal to a threshold. The magnitude of the current and the magnitude of the magnetic flux vary depending on a degree of a magnetic coupling between the transmission apparatus 120 and the reception apparatus 200. In the non-resonance state, the magnitude of the magnetic flux becomes larger as the transmission apparatus 120 and the reception apparatus approach each other. Moreover, in the resonance state, the magnitude of the current becomes smaller as the transmission apparatus 120 and the reception apparatus approach each other. Note that thresholds for the magnitude of the magnetic flux, the magnitude of the current are set in advance as a value determined when the reception apparatus 200 enters the transmission area by performing a simulation or the like.

Next, a circuit configuration of the reception apparatus 200 will be described. In Fig.3, among the circuit configuration of the reception apparatus 200, a circuit configuration related to a power supply to the battery 210 is illustrated, and illustration of other portions is omitted. As shown in Fig.3, the secondary resonance circuit 240 is configured of a secondary coil Lr and a secondary capacitor Cr connected in series. Moreover, the reception apparatus 200 is provided with a secondary detection circuit 250 in addition to the configuration shown in Fig.1.

The secondary detection circuit 250 is provided with a magnetic flux sensor that detects a magnitude of the magnetic flux interlinked with the secondary coil Lr. According to the present embodiment, the magnetic flux sensor utilizes a change in the voltage of the detection coil magnetically coupled with the secondary coil Lr so as to detect the magnitude of the magnetic flux. The secondary detection circuit 250 outputs a signal indicating a magnitude of the detected magnetic flux to the reception side control unit 220.

The reception side control unit 220 utilizes a magnitude of a signal outputted from the secondary detection circuit 250 to determine whether the reception apparatus 200 is located within the transmission area. Specifically, the reception side control unit 220 determines that the reception apparatus 200 is located within the transmission area when the magnitude of the magnetic flux is larger than or equal to the predetermined threshold. Note that the threshold for the magnitude of the magnetic flux is set in advance as a value determined when the reception apparatus 200 enters the transmission area by performing a simulation or the like. According to a configuration in which the reception side control unit 220 does not transmit, as reception apparatus side information, the information indicating whether the reception apparatus 200 is located within the transmission area to the control apparatus 300, the reception apparatus 200 may not include the secondary detection circuit 250.

According to the present embodiment, the reception circuit 230 includes a rectifier circuit 231 and a DC-DC converter 232. The rectifier circuit 231 is configured of four switching elements Q21 to Q24 that constitute a bridge circuit, and a smoothing capacitor C22. According to the present embodiment, the switching elements Q21 to Q24 are each configured of MOSFET. The rectifier circuit 231 switches states of the switching elements Q21 to Q24 between ON and OFF in accordance with a control of the reception side control unit 220, thereby converting the AC power received from the second resonant circuit 240 to be DC power and controlling the battery 210 to be supplied with the DC power or stopping the power supply to the battery 210. The DC-DC converter 232 converts the voltage of the DC power supplied from the rectifier circuit 231 in accordance with a control of the reception side control unit 220, and supplies the converted DC power to the battery 210.

### A-3. Power supply suppression control

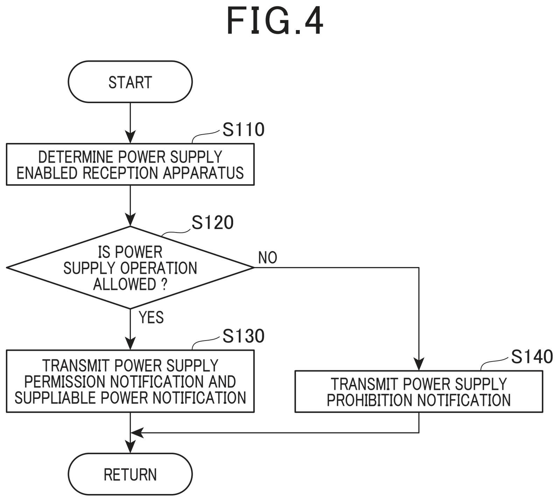

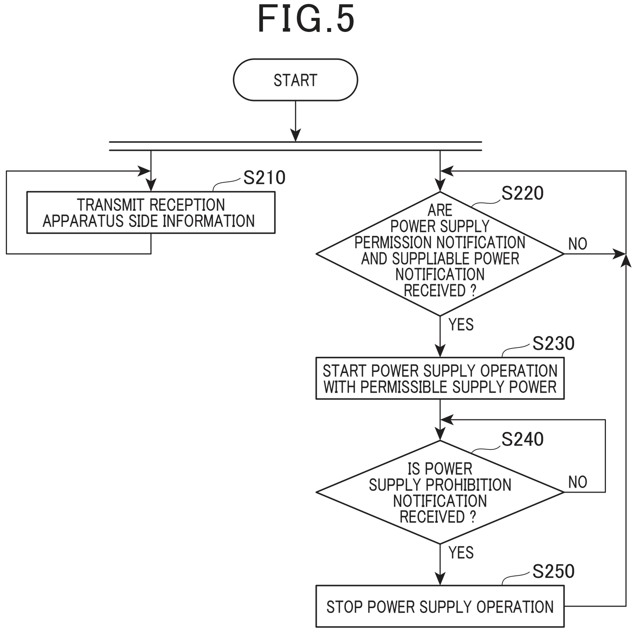

As shown in Figs.4 and 5, each reception apparatus 200 of the present embodiment transmits the above-described reception apparatus side information to the power supply suppression unit 400, and starts or stops a power supply operation in accordance with various notifications transmitted by the power supply suppression unit 400. A control executed by the reception apparatus 200 and the power supply suppression unit 400 corresponds to power supply suppression control.

The power supply suppression control unit 400 starts to perform a control shown in Fig,4 when the control apparatus 300 is activated, and repeatedly executes the control while the control apparatus 300 is activated. At step S110, the reception apparatus side information received from the respective reception apparatus 200 is utilized to determine a reception apparatus 200 to which the power supply operation is enabled (hereinafter also referred to as power supply enabled reception apparatus). More specifically, the power supply suppression control unit 400 determines a power supply enabled reception apparatus in some of the reception apparatuses 200 as subject apparatuses (hereinafter also referred to as notification object reception apparatus) among a plurality of reception apparatuses 200. According to the present embodiment, the power supply suppression control unit 400 determines a reception apparatus 200 located in the transmission area among a plurality of reception apparatuses 200 to be the notification object reception apparatus.

The determination for the power supply enabled reception apparatus will be described in more detail. As described above, the power supply suppression control unit 400 receives, as reception apparatus side information, information including location information of the reception apparatus 200, information of whether the reception apparatus 200 is located within the transmission area and information about at least one of state of charge (SOC) of the battery 210, a remaining capacity of the battery 210, current amount of power supply and current power consumption, from the respective reception apparatuses 200. The power supply suppression control unit 400 utilizes at least one of location information of the respective reception apparatuses 200, and information on whether the respective reception apparatuses 200 are located within the transmission area, thereby identifying a transmission apparatus 120 capable of being magnetically coupled to the reception apparatus 200 and estimating a required amount of power supply based on the number of transmission apparatuses 200 capable of being coupled with the reception apparatus 200. Further, the power supply suppression control unit 400 utilizes the SOC or the remaining capacity of the battery 210 and estimates the required amount of power supply required by the respective reception apparatuses 200. Furthermore, the power supply suppression control unit 400 may utilize the current amount of power supply or power consumption of the reception apparatus 200 to estimate the required amount of power supply of the respective reception apparatuses 200. Thus, the power supply suppression control unit 400 utilizes the required amount of power supply estimated using the reception apparatus side information, and determines the power supply enabled reception apparatus such that the required amount of power supply does not exceed the output power limit of the transmission circuit 110. For example, the power supply suppression control unit 400 sequentially adds the required amount of power supply of the respective reception apparatuses 200 in the receipt order of the reception apparatus side information, and determines respective reception apparatuses 200, corresponding to the reception apparatus side information which are received until the total required amount of power supply reaches the output power limit, to be the power supply enabled reception apparatus.

At step S120, the power supply suppression control unit 400 determines whether a power supply operation is allowed for each notification object reception apparatus. When determined that the power supply operation is allowed (step S120: YES), the power supply suppression control unit 400 transmits a power supply permission notification and a suppliable power notification to a notification object reception apparatus to which the power supply operation is allowed to be performed (step S130). The power supply permission notification refers to a notification that notifies the reception apparatus 200 of a permission of the power supply. Note that 'suppliable power notification' refers to a notification that notifies the reception apparatus 200 of a suppliable amount of power.

On the other hand, when determined that the power supply operation is not allowed (step S120: NO), the power supply suppression control unit 400 transmits a power supply prohibition notification (step S140) to a reception apparatus 200 to which a power supply operation is not allowed. Note that 'power supply prohibition notification' refers to a notification that prohibits performing the power supply operation to the reception apparatus 200. The power supply suppression control unit 400 repeatedly executes the above-described control.

The respective reception apparatus 200, when entered the transmission area, starts to execute the control shown in Fig.5, and repeatedly executes the control. As shown in Fig.5, the reception apparatus 200 executes the control at step S210 and controls at steps S220. S230, S240 and S250 in parallel.

At step S210, the reception side control unit 220 transmits reception apparatus side information to the power supply suppression unit 400. According to the present embodiment, the reception side control unit 220 repeatedly executes the process at this step 210 each time a predetermined time elapses.

At step S220, the reception side control unit 220 determines whether a power supply permission notification and a suppliable power notification are received. When determined that a power supply permission notification and a suppliable power notification are not received (step S220: No), the reception side control unit 220 repeatedly executes the determination process.

In the case where a power supply permission notification and a suppliable power notification are received (step S220: Yes), the reception side control unit 220 controls the reception circuit 230 to start the power supply operation (step S230) with a permissible supply power. More specifically, the reception side control unit 220 controls the rectifier circuit 231 to start the power supply operation and controls the DC-DC converter 232 to control an amount of power supplied to the battery 210.

At step S240, the reception side control unit 220 determines whether the power supply prohibition notification is received. While determining that the power supply prohibition notification is not received (step S240: No), the reception side control unit 220 controls the reception circuit 230 and continues to perform power supply operation.

When determined that the power supply prohibition notification is received (step S240: Yes), the reception side control unit 220 controls the reception circuit 230 to stop the power supply operation (step S250). More specifically, the reception side control unit 220 controls the rectifier circuit 231 to stop the power supply operation. Thereafter, the reception side control unit 220 again executes the process at step S220.

According to the wireless power transfer system 1000 of the above-described first embodiment, since the reception apparatus side information is utilized to control respective reception apparatuses 200 such that a total amount of power supply required by a plurality of reception apparatuses 200 does not exceed an output power limit, the amount of power supply can be adjusted depending on operation states of the respective reception apparatuses 200.

Further, since the wireless power transfer system 1000 transmits a power supply permission notification or a power supply prohibition notification to the reception apparatus 200 and the reception apparatus 200 executes the power supply operation when receiving the power supply permission notification, the power supply operation can be selectively performed for a part of the reception apparatus 200 and thus an amount of power supply can be suppressed. Further, the wireless power transfer system 1000 transmits a suppliable power notification to the reception apparatus 200, and the reception apparatus 200 executes the power supply operation with a permissible supply power notified by the suppliable power notification. Hence, the permissible supply power is suppressed depending on the operation state, compared to that in a normal situation and notified to the reception apparatus 200, whereby the amount of power supply can be suppressed. Furthermore, compared to a configuration in which the power is simultaneously supplied to all of the reception apparatus 200 or a configuration in which the power is supplied with the maximum power constantly, a suppliable power required for the transmission circuit 110 can be suppressed. As a result, the introduction cost of the wireless power transfer system 1000 can be reduced.

### B. Second Embodiment

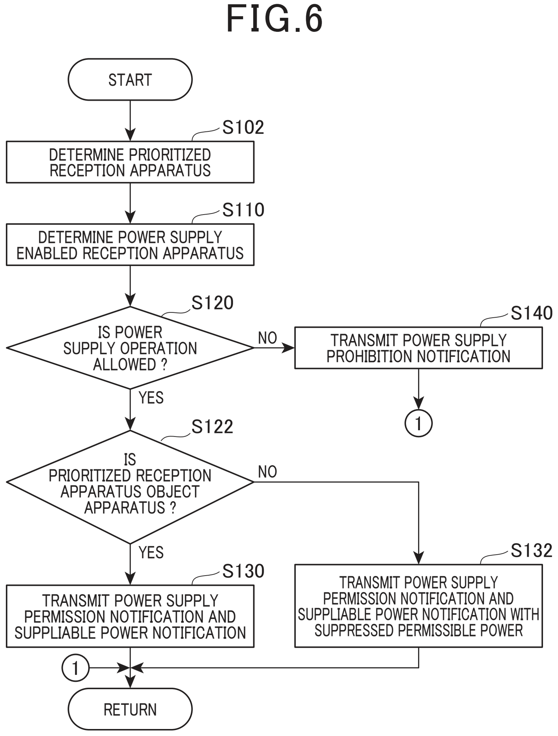

The wireless power transfer system 1000 according to the second embodiment differs from the wireless power transfer system 1000 of first embodiment in that the power supply suppression unit 400 further executes processes at steps S102, S122 and S132 in the power supply suppression control as shown in Fig.6. Note that the system configuration of the wireless power transfer system 1000 and other processes in the power supply suppression control according to the second embodiment are the same as those in wireless power transfer system 1000 according to the first embodiment. Hence, the same reference symbols are applied to the same configurations and the same processes, and explanation thereof will be omitted.

According to the present embodiment, respective reception apparatuses 200 transmit, as the reception apparatus side information, information including at least one of the SOC of the battery 210, the remaining capacity of the batter 210 and the current power consumption to the power supply suppression unit 400.

As shown in Fig.6, at step S102, the power supply suppression unit 400 utilizes the reception apparatus side information to determine a prioritized reception apparatus. The prioritized reception apparatus refers to a reception apparatus 200 to which a power supply operation is allowed to be performed with priority. For example, the power supply suppression unit 400 may compare SOCs or remaining capacities among respective notification object reception apparatuses, select a predetermined number of notification object reception apparatuses in ascending order of the remaining capacity, and determine the prioritized reception apparatus. This is because, since equipment to which such a reception apparatus 200 is mounted may not continue operation due to lack of power, the equipment is strongly required to be supplied with power. Moreover, the power supply suppression unit 400 may compare the power consumption among respective notification object reception apparatuses, selects a predetermined number of notification object reception apparatuses in descending order of the power consumption, and determine the prioritized reception apparatus. This is because, equipment to which such a reception apparatus 200 is mounted may not continue operation since the power is consumed in short period of time, thus the equipment is strongly required to be supplied with power.

At step S110, the power supply suppression unit 400 determines a power supply enabled reception apparatus such that a power supply permission notification is transmitted to a prioritized reception apparatus with priority.

At step S120, when determined that the power supply operation is allowed to a notification object reception apparatus of a determination object (step S120: Yes) and the notification object reception apparatus is a prioritized reception apparatus (step S122: Yes), the power supply suppression unit 400 executes the above-described process at step S130 and again executes the process at step S102.

On the other hand, when determined that the power supply operation is allowed to a notification object reception apparatus of a determination object (step S120: Yes) and the notification object reception apparatus 200 is not a prioritized reception apparatus (step S122: No), the power supply suppression unit 400 transmits a power supply permission notification and a suppliable power notification (step S132) notifying an amount of power supply suppressed compared to an amount of power supply indicated by the suppliable power notification transmitted at step S130. In other words, the power supply suppression unit 400 notifies the notification object reception apparatus which is a power supply enabled reception apparatus but is not prioritized reception apparatus, of an amount of power suppressed compared to an amount of power notified to the prioritized reception apparatus. After completing the process at step S132, the power supply suppression unit 400 again executes the process at step S102.

According to the wireless power transfer system 1000 of the second embodiment, effects and advantages similar to those of the wireless power transfer system 1000 according to the first embodiment can be obtained. Additionally, since a prioritized reception apparatus is determined and the power supply permission notification is transmitted to the prioritized reception apparatus with priority, the power supply operation can be preferentially performed to a reception apparatus 200 where the power supply operation is strongly required, and equipment to which the reception apparatus is mounted can be prevented from being stopped because the power is not supplied.

Further, the power supply suppression unit 400 transmits a notification that notifies a permissible supply power suppressed from the prioritized reception apparatus even when allowing the power supply operation to a notification object reception apparatus which is not a prioritized reception apparatus. Hence, a total amount of power supply can be prevented from exceeding an output power limit.

### C. Third Embodiment

The wireless power transfer system 1000 according to the third embodiment differs from a wireless power transfer system 1000 of the second embodiment in that a determination method of a prioritized reception apparatus is different. Note that the system configuration of the wireless power transfer system 1000 and other processes in the power supply suppression control according to the third embodiment are the same as those in the power supply suppression control according to the second embodiment. Hence, the same reference symbols are applied to the same configurations and the same processes, and explanation thereof will be omitted.

In the above-described step S102, the power supply suppression unit 400 determines a mobile reception apparatus not a fixed reception apparatus to be a prioritized reception apparatus with priority. For example, the power supply suppression unit 400 may compare SOCs or remaining capacities of the batteries 210 of respective mobile reception apparatuses among the notification object reception apparatuses, and select a predetermined number of mobile reception apparatuses in ascending order of the SOC or the remaining capacity, and determine the prioritized reception apparatus. Further, the power supply suppression unit 400 may compare respective power consumption of the mobile reception apparatuses among respective notification object reception apparatuses, select a predetermined number of mobile reception apparatuses in descending order of the power consumption, and determine the prioritized reception apparatus.

According to the wireless power transfer system 1000 of the above-described third embodiment, effects and advantages similar to the wireless power transfer system 1000 of the second embodiment can be obtained. Moreover, since a power reception permission notification is transmitted to the mobile reception apparatus with priority, power supply operation can be performed with priority to the mobile reception apparatus having less power reception chances compared to the fixed reception apparatus, and the mobile reception apparatus can be prevented from being stopped because the power is not supplied.

### D. Fourth Embodiment

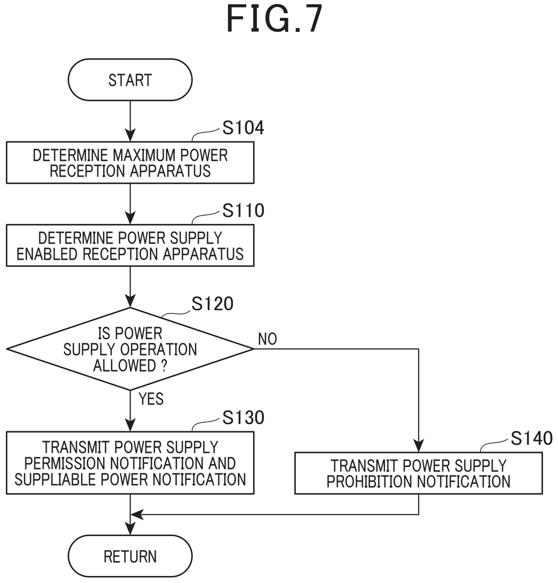

As shown in Fig.7, the wireless power transfer system 1000 according to fourth embodiment differs from the wireless power transfer system 1000 according to the first embodiment in that the power supply suppression unit 400 additionally executes the process at step S104 in the power supply suppression control. Note that the system configuration of the wireless power transfer system 1000 and other processes in the power supply suppression control according to the fourth embodiment are the same as those in the wireless power transfer system 1000 according to the first embodiment. Hence, the same reference symbols are applied to the same configurations and the same processes, and explanation thereof will be omitted.

According to the present embodiment, respective reception apparatuses 200 transmit information including at least SOC of the battery 210 as reception apparatus side information to the power supply suppression unit 400.

At step S104, the power supply suppression unit 400 utilizes the reception apparatus side information to determine a maximum power reception apparatus. The maximum power reception apparatus refers to a notification object reception apparatus among a plurality of notification object apparatuses, having a SOC of the battery 210 less than a predetermined threshold and capable of being supplied with an upper limit transmission power of the transmission apparatus 120. Note that the amount of supply power is determined depending on the SOC of the battery 210 such that the lower the SOC, the larger the amount of power that can be supplied.

At step S110, the power supply suppression unit 400 determines only the maximum power reception apparatus to be power supply enabled reception apparatus. Note that the number of maximum power reception apparatuses to be determined as the power supply enabled reception apparatus among a plurality of maximum power reception apparatuses, may be arbitrarily determined depending on the upper limit transmission power of the transmission apparatus 120 and the output power limit of the transmission circuit 110.

The control processes after step S120 are the same as those in the above-described first embodiment. However, since only the maximum power reception apparatus is determined as a power supply enabled reception apparatus at step S110, the power supply permission notification and the suppliable power notification are transmitted to only the maximum power reception apparatus at step S130.

According to the above-described wireless power transfer system 1000 of the fourth embodiment, effects and advantages similar to the wireless power transfer system 1000 of the first embodiment can be obtained. Further, since the power supply permission notification is transmitted to the maximum power reception apparatus only, a frequency of performing the power supply operation with the upper limit transmission power of the transmission apparatus 120 can be prevented from lowered. Hence, a power supply efficiency of the wireless power transfer system 1000 can be prevented from being lowered.

### E. Fifth Embodiment:

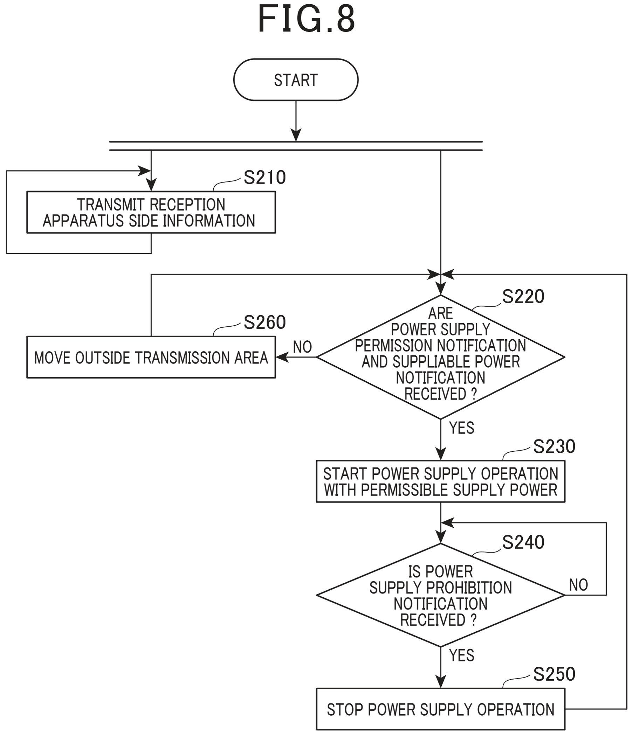

As shown in Fig.8, the wireless power transfer system 1000 according to the fifth embodiment differs from the wireless power transfer system 1000 of the first embodiment in that the reception apparatus 200 additionally executes the process at step S260 in the power supply suppression control. Note that the system configuration of the wireless power transfer system 1000 and other processes in the power supply suppression control according to the fifth embodiment are the same as those in the wireless power transfer system 1000 according to the first embodiment. Hence, the same reference symbols are applied to the same configurations and the same processes, and explanation thereof will be omitted.

At step S220, when determined that a power supply permission notification and a suppliable power notification are not received (step S220: No), in other words, when receiving a power supply prohibition notification, the reception side control unit 220 causes the electric vehicle 202 to move outside the transmission area (step S260). More specifically, the reception side control unit 220 controls the electric vehicle 202 via an ECU (not shown) mounted on the electric vehicle 202 for controlling the electric vehicle 202.

According to the above-described wireless power transfer system 1000 of the fifth embodiment, effects and advantages similar to the wireless power transfer system 1000 of the first embodiment can be obtained. Moreover, since the reception apparatus 200 that receives the power supply prohibition notification moves outside the transmission area, a chance of power supply of a power supply apparatus that strongly requires power supply is prevented from being decreased. Hence, the reception apparatus 200 can be prevented from being stopped because the power is not supplied.

### F. Sixth Embodiment

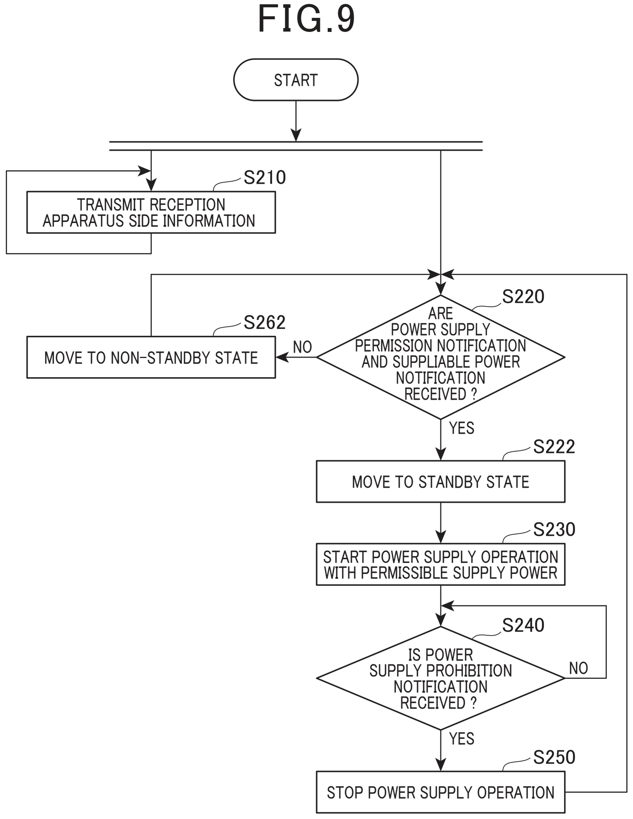

As shown in Fig.9, the wireless power transfer system 1000 according to the sixth embodiment differs from the wireless power transfer system 1000 according to the fifth embodiment in that the reception apparatus 200 executes a process at step S262 instead of executing the process at step S260 and additionally executes a process at step S222 in the power supply suppression control. Note that the system configuration of the wireless power transfer system 1000 and other processes in the power supply suppression control according to the sixth embodiment are the same as those in the wireless power transfer system 1000 according to the fifth embodiment. Hence, the same reference symbols are applied to the same configurations and the same processes, and explanation thereof will be omitted.

At step S220, when determined that a power supply permission notification and a suppliable power notification are not received (step S220: No), in other words, when receiving a power supply prohibition notification, the reception side control unit 220 controls the reception circuit 230 to cause a power reception state of the reception apparatus 200 to be a non-standby state which does not wait an activation of the power supply operation (step S262).

On the other hand, in the case where a power supply permission notification and a suppliable power notification are received (step S220: Yes), the reception side control unit 220 controls the reception circuit 230 to cause a power reception state of the reception apparatus 200 to be a standby state in which the power supply operation can be executed.

According to the above-described wireless power transfer system 1000 of the sixth embodiment, effects and advantages similar to the wireless power transfer system 1000 of the first embodiment can be obtained. Moreover, since the reception apparatus 200 that receives a power supply prohibition notification changes the state from the standby state to the non-standby state, a power consumption for maintaining the standby state can be suppressed. Thus, since the power consumption of the battery 210 can be suppressed, frequency of the power supply operation can be reduced and a total amount of power supply can be prevented from exceeding an output power limit.

### G. Other Embodiments:

(G1) Also, according to the above-described embodiments, the reception apparatus 200 is mounted to a mobile body or a fixed facility. However, the present disclosure is not limited to this configuration. The reception apparatus 200 may be mounted to the mobile body only. Also, with this wireless power transfer system 1000, effects and advantages similar to those in the above-described embodiments can be obtained.

(G2) In the above-described embodiments, respective reception apparatuses 200 transmit the reception apparatus side information to the power supply suppression unit 400 each time a predetermined time elapses. However, the present disclosure is not limited to this configuration. For example, the power supply suppression unit 400 may transmit a notification to all of the reception apparatuses 200 at any timing, requiring a transmission of the reception apparatus side information, and only a reception apparatus 200 located in the transmission area among the reception apparatuses 200 which receive the notification may transmit the reception apparatus side information to the power supply suppression unit 400. Also, with this wireless power transfer system 1000, effects and advantages similar to those in the above-described embodiments can be obtained. Further, since the reception apparatus 200 which is not located in the transmission area is not required to transmit the reception apparatus side information, power consumption for transmitting the information can be reduced.

(G3) According to the above-described embodiments, the power supply suppression unit 400 determines a reception apparatus 200 located in the transmission area to be a notification object reception apparatus among a plurality of reception apparatuses 200. However, the present disclosure is not limited to this configuration. The notification object reception apparatus may include a reception apparatus 200 located outside the transmission area. For example, in the case where the notification object reception apparatus is located outside the transmission area, the power supply suppression unit 400 may transmit a power supply prohibition notification to the notification object reception apparatus. Also, in the case where the required amount of power supply of respective reception apparatuses 200 located within the transmission area is below the output power limit and remaining power is present for supplying power to other reception apparatuses, the power supply suppression unit 400 may transmit a power supply permission notification and a suppliable power notification to a reception apparatus 200 located outside the transmission area. Also, with this wireless power transfer system 1000, effects and advantages similar to those in the above-described embodiments can be obtained.

(G4) According to the above-described embodiments, the power supply suppression unit 400 transmits a power supply permission notification and a suppliable power notification to the power supply enabled reception apparatus. However, the present disclosure is not limited to this configuration. The power supply suppression unit 400 may only transmit a power supply permission notification to a power supply enabled reception apparatus, and the power supply enabled reception apparatus which receives the power supply permission notification may execute a power supply operation with a predetermined amount of supply power. Also, with this wireless power transfer system 1000, effects and advantages similar to those in the above-described embodiments can be obtained.

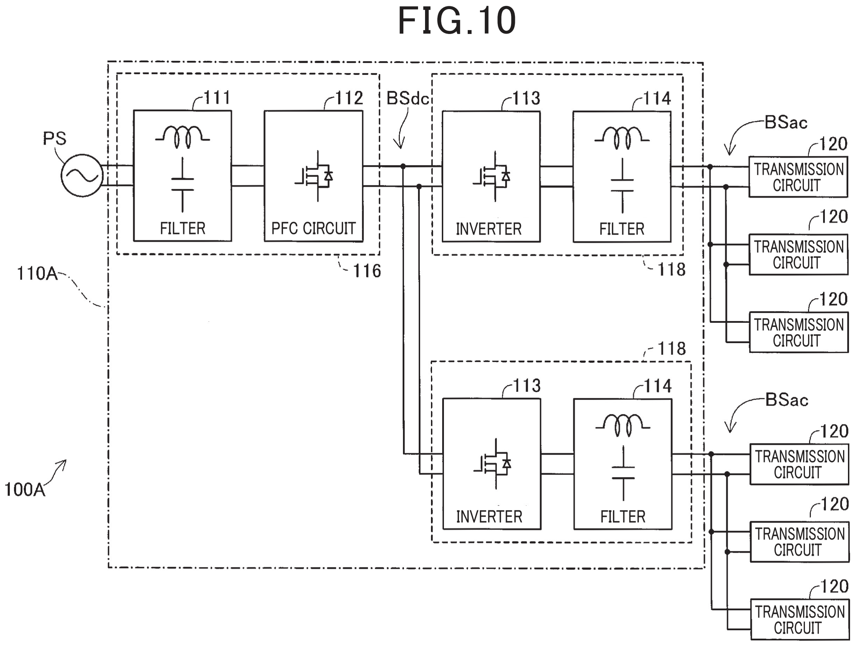

(G5) According to the above-described embodiments, the power transmission system 100 includes a plurality of transmission circuit 110 mutually connected in parallel to the system power source PS, and each transmission circuit 110 includes a noise filter 111, a PFC circuit 112, an inverter 113 and a high frequency filter 114. However, the present disclosure is not limited to this configuration. As shown in Fig.10, the power transmission system 100A may be provided with a transmission circuit 110A instead of the transmission circuit 110, including a DC power circuit 116 connected to the system power source PS and a plurality of AC power circuits 118 mutually connected in parallel to the DC power circuit 116. The DC power circuit 116 includes a noise filter 111 and a PFC circuit 112, and converts the AC power supplied by the system power source PS to a DC power, smooths the converted DC power and outputs the smoothed DC power. The DC power outputted by the DC power circuit 116 is supplied to respective AC power circuits 118 via a DC power transmission bus BSdc. The DC power circuit 118 includes an inverter 113 and a high frequency filter 114, and converts the DC power supplied by the DC power circuit 116 to a high frequency AC power and outputs the converted high frequency AC power. The high frequency AC power outputted by the AC power circuit 118 is supplied to the respective transmission apparatuses 120 via an AC power transmission bus BSac. Note that only one AC power circuit 118 may be connected to the DC power circuit 116 or three or more AC power circuits 118 may be connected to the DC power circuit 116. According to the wireless power transfer system 1000 provided with the power transmission system 100A, the AC power circuit 118 is provided in the vicinity of the transmission circuit 120, whereby the length of the AC power transmission bus BSac having a manufacturing cost higher than that of the DC power transmission bus BSdc can be shortened. As a result, the introduction cost of the wireless power transfer system 1000 can be reduced.

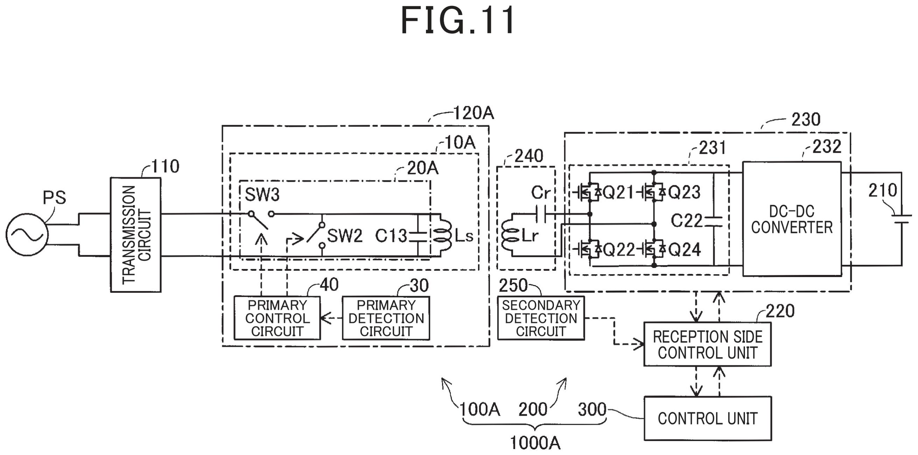

(G6) According to the above-described embodiments, the transmission apparatus 120 includes a variable impedance element 20. However, the present disclosure is not limited to this configuration. As shown in Fig.11, the transmission apparatus may be configured as a transmission apparatus 120A having a variable impedance element 20A instead of the variable impedance element 20. The variable impedance element 20A together with a primary coil Ls constitutes a primary resonance circuit 10A. The variable impedance element 20A includes a capacitor C13 and a switch SW2 connected in parallel to the primary coil Ls, and a switch SW3 disposed between the transmission circuit 110 and the switch 2 and connected in series to the primary coil Ls. In the variable impedance element 20A thus configured, when the primary detection circuit 30 controls the ON-OFF states of the switches SW2 and SW3, the resonance state of the primary resonance circuit 10A can be changed. Also, with this wireless power transfer system 1000A provided with the above-described transmission apparatus 120A, effects and advantages similar to those in the above-described embodiments can be obtained.

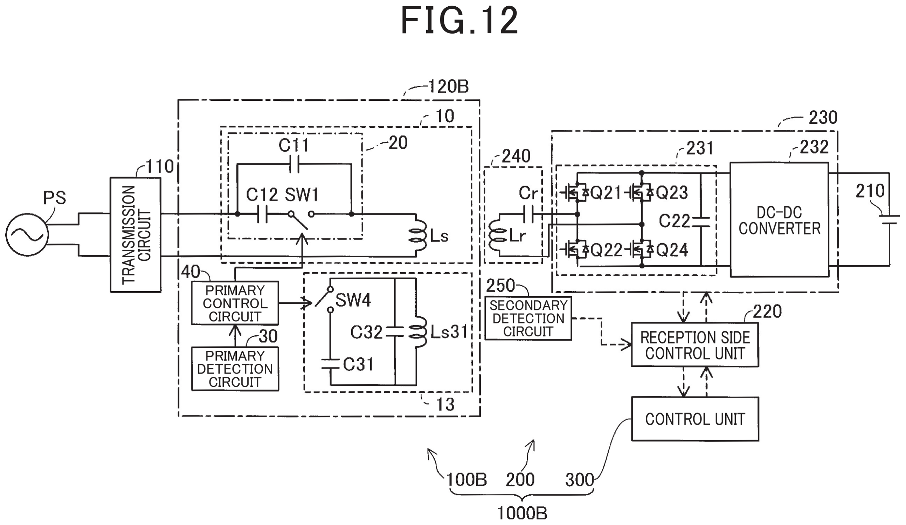

Moreover, as shown in Fig.12, the transmission apparatus may be configured as a transmission apparatus 120B provided with a tertiary resonance circuit 13 in addition to the configuration of the transmission apparatus 120. The tertiary side resonance circuit 13 is a closed circuit including a tertiary coil Ls31, a switch SW4, a capacitor C31 and a capacitor C32. The switch SW4 and the capacitor C31 are connected in series and the series-connected SW4 and the capacitor C31 is connected in parallel to the tertiary coil Ls31 and the capacitor C32. The tertiary resonance circuit 13 is arranged such that the tertiary coil Ls31 is magnetically coupled to the primary coil Ls of the primary resonance circuit 10 and the secondary coil Lr of the secondary resonance circuit 240. In the transmission apparatus 120B thus configured, the primary detection circuit 30 changes the ON-OFF state of the switch SW1 and the switch SW4, whereby the resonance state of the primary resonance circuit 10A and the tertiary resonance circuit 13 can be changed. Also, with this wireless power transfer system 1000B provided with a transmission system 100B including the above-described transmission apparatus 120B, effects and advantages similar to those in the above-described embodiments can be obtained. Note that a wireless power transfer system provided with a tertiary resonance circuit without the capacitor C31 instead of using the tertiary resonance circuit 13 also obtains effects and advantages similar to those in the above-described embodiments.

(G7) According to the above-described embodiments, the power supply suppression unit 400 utilizes a predetermined output power limit to control the reception apparatus 200 such that a total amount of power supply does not exceed the output power limit. However, the present disclosure is not limited to this configuration. The power supply suppression unit 400 may acquire information indicating current output power limit of the system power source PS and each transmission circuit 110 from the system power source PS and each transmission circuit 11, and utilize the acquired information to control the reception apparatus 200. According to the power supply suppression unit 400 thus configured, even in the case where the output power limit of the system power source PS and each transmission circuit 110 vary depending on an amount of power supply of other system power source used in an factory or a warehouse for example, the reception apparatus 200 can be controlled such that total amount of power supply does not exceed the current output power limit.

(G8) According to the above-described embodiments, the power supply suppression unit 400 also suppresses an amount of power supply for a notification object reception apparatus other than the prioritized reception apparatus to execute a power supply operation. However, the present disclosure is not limited to this configuration. The power supply suppression unit 400 may execute a power supply operation for the prioritized reception apparatus only. Also, with this wireless power transfer system 1000 thus configured, a power supply operation can be preferentially executed to a power reception apparatus 200 to which a power supply is strongly required, and equipment to which the reception apparatus 200 is mounted can be prevented from being stopped because the power is not supplied.

The power supply suppression unit 400 and method thereof disclosed in the present disclosure may be accomplished by a dedicated computer constituted of a processor and a memory programmed to execute one or more functions embodied by computer programs. Alternatively, the control unit and method thereof disclosed in the present disclosure may be accomplished by a dedicated computer provided by a processor configured of one or more dedicated hardware logic circuits. Further, the power supply suppression unit 400 and method thereof disclosed in the present disclosure may be accomplished by one or more dedicated computer where a processor and a memory programmed to execute one or more functions, and a processor configured of one or more hardware logic circuits are combined. Furthermore, the computer programs may be stored, as instruction codes executed by the computer, into a computer readable non-transitory tangible recording media.

The present disclosure is not limited to the above-described embodiments and modification examples and various configurations may be utilized without departing from the spirit of the present disclosure. For example, technical features in respective embodiments corresponding to technical features in examples described in the summary section, may be appropriately replaced or combined in order to solve a part or all of issues in the above-described problems to be solved, or in order to accomplish a part or all of the above-described effects and advantages. Further, unless the above-described technical features are described as necessary in the present specification, the technical features may be appropriately removed.

### (Example 1)

A wireless power transfer system (1000, 1000A,1000B) comprising:
a transmission circuit (110, 110A) supplied with power from a system power source (PS), supplying a high frequency AC power having a predetermined operating frequency;
a plurality of transmission apparatuses (120, 120A, 120B) mutually connected in parallel to the transmission circuit, capable of supplying power in a wireless manner;
a plurality of reception apparatuses (200), when being located in any one of transmission areas where the transmission apparatuses are capable of transmitting power, receiving power from the transmission apparatus in a wireless manner; and
a power supply suppression unit (400) that controls respective reception apparatuses such that a total amount of power supply required by the plurality of reception apparatuses does not exceed an output power limit as a continuous power in which the system power source and the transmission circuit are capable of continuing a power supply operation,
wherein
respective reception apparatuses transmit reception apparatus side information as information indicating operation states of the reception apparatuses to the power supply suppression unit; and
the power supply suppression unit utilizes the reception apparatus side information to control the respective reception apparatuses.

### (Example 2)

The wireless power transfer system according to example 1, wherein
the plurality of transmission apparatuses are each provided with a primary resonance circuit (10, 10A) having a primary coil (Ls) and a primary capacitor (C11, C12, C13);
the plurality of reception apparatuses each comprising:
   a secondary resonance circuit (240) including a secondary coil (Lr) and a secondary capacitor (Cr) to be magnetically coupled to the primary coil;
   a reception circuit (230) that rectifies an AC power outputted from the secondary resonance circuit to convert the rectified AC power to be a DC power;
   a reception side control unit (220) that controls the reception circuit; and
   a load apparatus (210) to which the DC power is supplied.

### (Example 3)

The wireless power transfer system according to example 1 or 2, wherein
the reception apparatuses each includes a battery (210) and transmit, as the reception apparatus side information, location information of the reception apparatus, information of whether the reception apparatus is located within the transmission area and information including at least one of a SOC of the battery, a remaining capacity of the battery, current power supply and current power consumption, to the power supply suppression unit;
the power supply suppression unit utilizes the reception apparatus side information to transmit, to respective notification object reception apparatuses as at least some of the reception apparatuses among the plurality of reception apparatuses, at least one of a power supply permission notification that notifies a permission of the power supply operation or a power supply prohibition notification that notifies a prohibition of the power supply operation and a suppliable power notification that notifies a permissible supply power as a suppliable amount of power; and
the notification object reception apparatus starts or continues to perform a power supply operation in the case where a predetermined power supply condition including a reception of the power supply permission notification is satisfied, and waits or stops performing the power supply operation in the case where the power supply prohibition notification is received, and performs an power supply operation when receiving the power supply permission notification.

### (Example 4)

The wireless power transfer system according to example 3, wherein
the power supply condition further includes a condition in which each reception apparatus is executing a predetermined operation.

### (Example 5)

The wireless power transfer system according to example 3 or 4, wherein
respective reception apparatuses transmit, as the reception apparatus side information, information including at least one of a SOC of the battery, a remaining capacity of the battery and current power consumption, to the power supply suppression unit; and
the power supply suppression unit utilizes the reception apparatus side information to determine, among a plurality of the notification object reception apparatuses, a prioritized reception apparatus as the notification object reception apparatus to which a power supply operation is allowed to be performed with priority, and transmits the power supply permission notification to the prioritized reception apparatus with priority.

### (Example 6)

The wireless power transfer system according to any one of examples 3 to 5, wherein
respective reception apparatuses transmit, as the reception apparatus side information, information including at least one of a SOC of the battery, a remaining capacity of the battery and current power consumption, to the power supply suppression unit; and
the power supply suppression unit utilizes the reception apparatus side information to determine, among a plurality of the notification object reception apparatuses, a prioritized reception apparatus as the notification object reception apparatus to which a power supply operation is allowed to be performed with priority, and transmits a notification of a suppressed permissible supply power which is suppressed from the permissible supply power notified to the prioritized reception apparatus, to the notification object reception apparatus which is not the prioritized reception apparatus among the plurality of the notification object reception apparatuses.

### (Example 7)

The wireless power transfer system according to example 3 or 4, wherein
respective reception apparatuses transmit, as the reception apparatus side information, information including at least a SOC of the battery, to the power supply suppression unit; and
the power supply suppression unit utilizes the reception apparatus side information to determine, among a plurality of the notification object reception apparatuses, a maximum power reception apparatus which is the notification object reception apparatus capable of being supplied with an upper limit transmission power of the transmission apparatus, and notifies only the maximum power reception apparatus of the power supply permission notification.

### (Example 8)

The wireless power transfer system according to any one of examples 3 to 7, wherein
the notification object reception apparatus which receives the power supply prohibition notification among the notification object reception apparatuses changes a state thereof from a standby state in which a power supply operation is capable of being immediately performed to a non-standby state in which a power supply operation is not capable of being immediately performed.

### (Example 9)

The wireless power transfer system according to any one of examples 3 to 8, wherein
at least some of the plurality of reception apparatuses serve as a mobile reception apparatus (202); and
the notification object reception apparatus as the mobile reception apparatus among the plurality of notification object reception apparatuses is caused to move outside the transmission area when receiving the power supply prohibition notification.

### (Example 10)

The wireless power transfer system according to any one of examples 3 to 9, wherein
the plurality of reception apparatuses includes a fixed reception apparatus as a reception apparatus mounted on a fixed facility provided fixedly in the transmission area and a mobile reception apparatus as the reception apparatus mounted on a mobile body; and
the power supply suppression unit transmits the power supply permission notification with priority to the mobile reception apparatus when the mobile reception apparatus is located in the transmission area.

### (Example 11)

The wireless power transfer system according to any one of examples 1 to 10, wherein
the transmission circuit comprising:
   a D C power circuit (116) that converts an AC power supplied from the system power source to be a DC power;
   a DC power transmission bus (BSdc) connected to the DC power circuit, being supplied with the DC power from the DC power circuit;
   an AC power circuit (118) connected to the DC power transmission bus, converting the DC power supplied from the DC power transmission bus to be the high frequency AC power; and
   an AC power transmission bus (Bsac) connected to the AC power circuit, being supplied with the high frequency AC power from the AC power circuit, wherein
the plurality of transmission apparatuses are connected in parallel to the AC power circuit via the AC power transmission bus.

### (Example 12)

A computer program for controlling a wireless power transfer system, wherein
the wireless power transfer system comprising:
   a transmission circuit supplied with power from a system power source, supplying a high frequency AC power having a predetermined operating frequency;
   a plurality of transmission apparatuses mutually connected in parallel to the transmission circuit, capable of supplying power in a wireless manner; and
   a plurality of reception apparatuses, when being located in any one of transmission areas where the transmission apparatuses are capable of transmitting power, receiving power from the transmission apparatus in a wireless manner, wherein
the computer program causes a computer to accomplish a function in which reception apparatus side information indicating operation states of respective reception apparatuses is utilized to control the respective reception apparatuses such that a total amount of power supply required by the plurality of reception apparatuses does not exceed an output power limit as a continuous power in which the system power source and the transmission circuit are capable of continuing a power supply operation.

### (Example 13)

A reception apparatus to which at least some of a plurality of transmission apparatuses supplies power in a wireless manner, wherein
the plurality of transmission apparatuses are mutually connected in parallel to a transmission circuit supplied with power from the system power source supplying a high frequency power having a predetermined operating frequency, the transmission apparatuses are capable of supplying power in a wireless manner;
the reception apparatus receives power such that a total amount of power supply required by a plurality of reception apparatuses including the reception apparatus does not exceed an output power limit as a continuous power in which the system power source and the transmission circuit are capable of continuing a power supply operation.

### (Example 14)

A transmission apparatus supplying power to a reception apparatus in a wireless manner, wherein
the transmission apparatus with other transmission apparatuses are mutually connected in parallel to a transmission circuit supplied with power from a system power source; and
the reception apparatus receives power such that a total amount of power supply required by a plurality of reception apparatuses including the reception apparatus does not exceed an output power limit as a continuous power in which the system power source and the transmission circuit are capable of continuing a power supply operation.

## Claims

1. A wireless power transfer system (1000, 1000A,1000B) comprising:
a transmission circuit (110, 110A) supplied with power from a system power source (PS), supplying a high frequency AC power having a predetermined operating frequency;
a plurality of transmission apparatuses (120, 120A, 120B) mutually connected in parallel to the transmission circuit, capable of supplying power in a wireless manner;
a plurality of reception apparatuses (200), when being located in any one of transmission areas where the transmission apparatuses are capable of transmitting power, receiving power from the transmission apparatus in a wireless manner; and
a power supply suppression unit (400) that controls respective reception apparatuses such that a total amount of power supply required by the plurality of reception apparatuses does not exceed an output power limit as a continuous power in which the system power source and the transmission circuit are capable of continuing a power supply operation,
wherein
respective reception apparatuses transmit reception apparatus side information as information indicating operation states of the reception apparatuses to the power supply suppression unit; and
the power supply suppression unit utilizes the reception apparatus side information to control the respective reception apparatuses.

2. The wireless power transfer system according to claim 1, wherein
the plurality of transmission apparatuses are each provided with a primary resonance circuit (10, 10A) having a primary coil (Ls) and a primary capacitor (C11, C12, C13);
the plurality of reception apparatuses each comprising:
a secondary resonance circuit (240) including a secondary coil (Lr) and a secondary capacitor (Cr) to be magnetically coupled to the primary coil;
a reception circuit (230) that rectifies an AC power outputted from the secondary resonance circuit to convert the rectified AC power to be a DC power;
a reception side control unit (220) that controls the reception circuit; and
a load apparatus (210) to which the DC power is supplied.

3. The wireless power transfer system according to claim 1, wherein
the reception apparatuses each includes a battery (210) and transmits, as the reception apparatus side information, location information of the reception apparatus, information of whether the reception apparatus is located within the transmission area and information including at least one of a SOC of the battery, a remaining capacity of the battery, current power supply and current power consumption, to the power supply suppression unit;
the power supply suppression unit utilizes the reception apparatus side information to transmit, to respective notification object reception apparatuses as at least some of the reception apparatuses among the plurality of reception apparatuses, at least one of a power supply permission notification that notifies a permission of the power supply operation or a power supply prohibition notification that notifies a prohibition of the power supply operation and a suppliable power notification that notifies a permissible supply power as a suppliable amount of power; and
the notification object reception apparatus starts or continues to perform a power supply operation in the case where a predetermined power supply condition including a reception of the power supply permission notification is satisfied, and waits or stops performing the power supply operation in the case where the power supply prohibition notification is received, and performs an power supply operation with a power of the power supply permission notification when receiving the power supply permission notification.

4. The wireless power transfer system according to claim 3, wherein
the power supply condition further includes a condition in which each reception apparatus is executing a predetermined operation.

5. The wireless power transfer system according to claim 3 or 4, wherein
respective reception apparatuses transmit, as the reception apparatus side information, information including at least one of a SOC of the battery, a remaining capacity of the battery and current power consumption, to the power supply suppression unit; and
the power supply suppression unit utilizes the reception apparatus side information to determine, among a plurality of the notification object reception apparatuses, a prioritized reception apparatus as the notification object reception apparatus to which a power supply operation is allowed to be performed with priority, and transmits the power supply permission notification to the prioritized reception apparatus with priority.

6. The wireless power transfer system according to claim 3 or 4, wherein
respective reception apparatuses transmit, as the reception apparatus side information, information including at least one of a SOC of the battery, a remaining capacity of the battery and current power consumption, to the power supply suppression unit; and
the power supply suppression unit utilizes the reception apparatus side information to determine, among a plurality of the notification object reception apparatuses, a prioritized reception apparatus as the notification object reception apparatus to which a power supply operation is allowed to be performed with priority, and transmits a notification of a suppressed permissible supply power which is suppressed from the permissible supply power notified to the prioritized reception apparatus, to the notification object reception apparatus which is not the prioritized reception apparatus among the plurality of the notification object reception apparatuses.

7. The wireless power transfer system according to claim 3 or 4, wherein
respective reception apparatuses transmit, as the reception apparatus side information, information including at least a SOC of the battery, to the power supply suppression unit; and
the power supply suppression unit utilizes the reception apparatus side information to determine, among a plurality of the notification object reception apparatuses, a maximum power reception apparatus which is the notification object reception apparatus capable of being supplied with an upper limit transmission power of the transmission apparatus, and notifies only the maximum power reception apparatus of the power supply permission notification.

8. The wireless power transfer system according to claim 3 or 4, wherein
the notification object reception apparatus which receives the power supply prohibition notification among the notification object reception apparatuses, changes a state thereof from a standby state in which a power supply operation is capable of being immediately performed to a non-standby state in which a power supply operation is not capable of being immediately performed.

9. The wireless power transfer system according to claim 3 or 4, wherein
at least some of the plurality of reception apparatuses serve as a mobile reception apparatus (202); and
the notification object reception apparatus as the mobile reception apparatus among the plurality of notification object reception apparatuses is caused to move outside the transmission area when receiving the power supply prohibition notification.

10. The wireless power transfer system according to claim 3 or 4, wherein
the plurality of reception apparatuses includes a fixed reception apparatus as a reception apparatus mounted on a fixed facility provided fixedly in the transmission area and a mobile reception apparatus as the reception apparatus mounted on a mobile body; and
the power supply suppression unit transmits the power supply permission notification with priority to the mobile reception apparatus when the mobile reception apparatus is located in the transmission area.

11. The wireless power transfer system according to any one of claims 1 to 4, wherein
the transmission circuit comprising:
a D C power circuit (116) that converts an AC power supplied from the system power source to be a DC power;
a DC power transmission bus (BSdc) connected to the DC power circuit, being supplied with the DC power from the DC power circuit;
an AC power circuit (118) connected to the DC power transmission bus, converting the DC power supplied from the DC power transmission bus to be the high frequency AC power; and
an AC power transmission bus (Bsac) connected to the AC power circuit, being supplied with the high frequency AC power from the AC power circuit, wherein
the plurality of transmission apparatuses are connected in parallel to the AC power circuit via the AC power transmission bus.

12. A computer program for controlling a wireless power transfer system, wherein
the wireless power transfer system comprising:
a transmission circuit supplied with power from a system power source, supplying a high frequency AC power having a predetermined operating frequency;
a plurality of transmission apparatuses mutually connected in parallel to the transmission circuit, capable of supplying power in a wireless manner; and
a plurality of reception apparatuses, when being located in any one of transmission areas where the transmission apparatuses are capable of transmitting power, receiving power from the transmission apparatus in wireless manner, wherein
the computer program causes a computer to accomplish a function in which reception apparatus side information indicating operation states of respective reception apparatuses is utilized to control the respective reception apparatuses such that a total amount of power supply required by the plurality of reception apparatuses does not exceed an output power limit as a continuous power in which the system power source and the transmission circuit are capable of continuing a power supply operation.

13. A reception apparatus to which at least some of a plurality of transmission apparatuses supplies power in a wireless manner, wherein
the plurality of transmission apparatuses are mutually connected in parallel to a transmission circuit supplied with power from the system power source supplying a high frequency power having a predetermined operating frequency, the transmission apparatuses are capable of supplying power in a wireless manner; and
the reception apparatus receives power such that a total amount of power supply required by a plurality of reception apparatuses including the reception apparatus does not exceed an output power limit as a continuous power in which the system power source and the transmission circuit are capable of continuing a power supply operation.

14. A transmission apparatus supplying power to a reception apparatus in a wireless manner, wherein
the transmission apparatus with other transmission apparatuses are mutually connected in parallel to a transmission circuit supplied with power from a system power source; and
the reception apparatus receives power such that a total amount of power supply required by a plurality of reception apparatuses including the reception apparatus does not exceed an output power limit as a continuous power in which the system power source and the transmission circuit are capable of continuing a power supply operation.
